# EUROPÄISCHE PATENTSCHRIFT

(11) **EP 3 770 028 B1**
(45) Veröffentlichungstag und Bekanntmachung des Hinweises auf die Patenterteilung: **27.12.2023**
(21) Anmeldenummer: 20179889.9
(22) Anmeldetag: 15.06.2020
(51) Int. Cl.: B60R 25/24, G07C 9/00

(54) **INNEN- UND AUSSENERKENNUNG VON ID GEBERN FÜR EIN FAHRZEUG**
INTERNAL AND EXTERNAL DETECTION OF ID TRANSMITTERS FOR A VEHICLE
DÉTECTION INTÉRIEURE ET EXTÉRIEURE D'IDENTIFICATEURS POUR UN VÉHICULE

(30) Priorität: 26.07.2019 DE 102019211192
(43) Veröffentlichungstag der Anmeldung: 27.01.2021
(73) Patentinhaber: VOLKSWAGEN AG, 38440 Wolfsburg (DE)
(72) Erfinder: Ette, Bernd, 38442 Wolfsburg (DE)
(74) Vertreter: 2SPL Patentanwälte PartG mbB

(56) Entgegenhaltungen:
- DE-A1- 10 341 286
- DE-A1-102013 225 600
- DE-A1-102015 109 468

## Beschreibung

Die Erfindung betrifft ein System und ein Verfahren zum Feststellen, ob ein ID-Geber sich im Innenraum eines Fahrzeugs befindet oder nicht. Dieses wird als Innen- und Außenerkennung eines ID-Gebers bezeichnet. Die Erfindung betrifft ferner ein Fahrzeug und ein ID-Geber, mit denen das Verfahren ausführbar ist.
ID-Geber sind Einrichtungen, die über eine drahtlose Kommunikation mit einem Fahrzeug einen Code austauschen können, den das Fahrzeug nutzt, um Funktionen, beispielsweise das Öffnen der Türen und/oder das Starten des Motors, freizugeben. ID-Geber sind somit tragbare mobile Einrichtungen, die ein Nutzer eines Fahrzeugs am Körper mitführt. Im Stand der Technik sind solche ID-Geber bei schlüssellosen Zugangssystemen bekannt, welche beispielsweise als Keyless-Go-Systeme bezeichnet werden. Nähert sich ein Nutzer an das Fahrzeug an, während er den ID-Geber bei sich trägt, so wird beispielsweise mittels einer Annäherungssensorik die Annäherung des Nutzers an das Fahrzeug erkannt. Vom Fahrzeug aus wird eine drahtlose Kommunikation mit dem ID-Geber initiiert und die darin gespeicherte ID abgefragt. Korrespondiert diese mit dem Fahrzeug, so werden die Fahrzeugtürenschlösser geöffnet, sodass der Nutzer in das Fahrzeug einsteigen kann.

Beispielsweise aus versicherungsrechtlichen Gründen ist es wünschenswert, dass ein verriegeltes Fahrzeug nicht entriegelt werden kann, wenn sich ein nicht zur Verwendung des Fahrzeugs autorisierter Nutzer dem Fahrzeug nähert und der mit dem Fahrzeug korrespondierende ID-Geber von dem autorisierten Benutzer im Innern des Fahrzeugs vergessen wurde. Um bei einer Annäherung an das Fahrzeug durch den nicht autorisierten Nutzer zu verhindern, dass die in dem ID-Geber gespeicherte ID über die drahtlose Kommunikation abgefragt wird und daraufhin Fahrzeugfunktionen freigegeben werden, ist es wünschenswert, die Freigabe nur zuzulassen, wenn sich der ID-Geber bereits bei der Annäherung außerhalb des Fahrzeuginnenraums befand. Entsprechend soll eine Aktivierung des Fahrzeugmotors über die ID des ID-Gebers nur möglich sein, wenn sich der ID-Geber im Innenraum des Fahrzeugs befindet. In beiden Situationen ist es somit wünschenswert, eine Innen- und Außenraumerkennung eines ID-Gebers für ein Fahrzeug zuverlässig durchführen zu können.

Aus der DE 10 2017 110 144 A1 ist ein Authentifizierungssystem für ein Fahrzeug zur Authentifizierung eines portablen ID-Gebers gegenüber dem Fahrzeug zur Freigabe von Fahrzeugfunktionen bekannt. Das Authentifizierungssystem weist eine erste Fahrzeug-Ultrabreitbandschnittstelle (Fahrzeug-UWB-Schnittstelle) und eine zweite Fahrzeug-UWB-Schnittstelle, ein Steuerungsmittel, optionale Näherungssensoren sowie optionale Niederfrequenzschnittstellen auf. Zumindest eine Antenne der ersten Fahrzeug-UWB-Schnittstelle ist außerhalb der Blechummantelung des Fahrzeugs angeordnet. Mit dem beschriebenen System sollen sogenannte Relay-Stations-Attacken verhindert werden, bei denen die drahtlose Kommunikationsverbindung zwischen dem Fahrzeug und dem ID-Geber über andere technische Hilfsmittel, die als Relay dienen, überbrückt wird, während der ID-Geber sich nicht in unmittelbarer Nähe des Fahrzeugs befindet. Hierzu wird ausgenutzt, dass die Ultrabreitbandkommunikation (englisch: ultra-wideband - UWB) Kommunikation mittels gepulster Signale ausgeführt wird. Da ein breites Frequenzspektrum zeitgleich genutzt wird, ist die Ausbreitung der Signale stark eingegrenzt. Ferner kann aus dem zeitlichen Verlauf der Kommunikation zwischen einer Ultrabreitbandkommunikationsanfrage und der darauffolgenden Ultrabreitbandkommunikationsantwort unter Berücksichtigung der Laufzeit elektromagnetischer Wellen der Abstand zwischen der Ultrabreitband-Sende- und Empfangseinrichtung des Fahrzeugs und dem ID-Geber ermittelt werden.

Die US 2015/0291126 A1 beschreibt ein System, bei dem die tatsächliche Öffnung einer Tür oder Klappe, beispielsweise einer Kofferraumklappe, darüber gesteuert wird, dass eine Bewegung des Nutzers relativ zum Fahrzeug im Raum vor dem Fahrzeug erfasst und hieraus ein Muster abgeleitet wird, das mit vorgekannten Mustern verglichen wird. Stimmen das Bewegungsmuster des Nutzers und das im Fahrzeug hinterlegte Muster überein, wird die Fahrzeugtür oder Fahrzeugklappe geöffnet. Zusätzlich kann die ID eines ID-Gebers ausgewertet werden, sodass eine Öffnung nur stattfindet, sofern das Bewegungsmuster mit dem vorgegebenen Bewegungsmuster übereinstimmt und zusätzlich die ID als mit dem Fahrzeug korrespondierend erkannt ist. Zur Bestimmung des Bewegungsmusters des Nutzers können Ultraschallsensoren einer Parkabstandssteuerung (englisch park distance control - PDC) genutzt werden. Alternativ ist beschrieben, anhand einer Ultrabreitbandkommunikation mit dem ID-Geber den Abstand zum ID-Geber zu messen, um hieraus das Bewegungsmuster abzuleiten.

Die DE 10 2015 109 468 A1 beschreibt ein Berechtigungssystem für Fahrzeuge, das wenigstens ein Authentifikationselement, wenigstens eine Vorrichtung zur Ortung des Authentifikationselements und wenigstens eine Vergleichseinheit aufweist, wobei das Authentifikationselement, insbesondere ein Schlüssel oder ein Keyless-Go-Mittel für ein Fahrzeug wenigstens eine Funkschnittstelle zum Senden und/oder Empfangen wenigstens eines fahrzeuggenerierten Ortsdatensignals, wenigstens ein Inertialsensorelement zur Erfassung von Inertialdaten im Zusammenhang mit wenigstens einer Bewegung und/oder wenigstens einer Beschleunigung, wenigstens eine Inertialdatenschnittstelle zum Senden und/oder Empfangen von Inertialdaten aufweist, wobei die Vorrichtung zur fahrzeugseitigen Anordnung vorgesehen ist, und wobei die Vorrichtung wenigstens eine Funkeinrichtung zum Senden und/oder Empfangen des Ortsdatensignals, und wenigstens eine Ortsdatensignalaustauschschnittstelle zum Austausch von Ortssignaldaten mit der Vergleichseinheit aufweist, wobei die Vergleichseinheit wenigstens eine Empfangseinrichtung zum Empfang der Ortssignaldaten und der Inertialdaten, und wenigstens ein Recheneinheit zur Erzeugung von Vergleichsdaten basierend auf den Ortssignaldaten und den Inertialdaten aufweist. Des Weiteren betrifft die Erfindung auch noch ein Verfahren zur Kontrolle der Zugangsberechtigung mit einem Berechtigungssystem.

Die DE 103 41 286 A1 beschreibt ein Zugangskontrollsystem für ein Fahrzeug auf Funkbasis, wobei UWB-Funksignale verwendet werden, anhand derer eine Positions- bzw. Bewegungsrichtungsbestimmung eines Benutzers vorgenommen werden kann.

Die DE 10 2013 225 600 A1 beschreibt ein Fahrzeugsystem und ein Verfahren zum Erfassen der Position eines tragbaren, drahtlosen Geräts. Das Fahrzeugsystem umfasst das tragbare Gerät und eine Vielzahl von an einem Fahrzeug angeordneten Basisstationen. Das tragbare Gerät ist konfiguriert, um ein erstes Funksignal und ein zweites Funksignal, die Bewegungsdaten des tragbaren Geräts angeben, zu senden. Eine Hauptbasisstation aus der Vielzahl von Basisstationen ist konfiguriert, um eine erste endgültige Position des tragbaren Geräts in Reaktion darauf zu bestimmen, dass jede aus der Vielzahl von Basisstationen das erste Funksignal erfolgreich empfängt. Die Hauptbasisstation ist weiterhin konfiguriert, um eine zweite endgültige Position des tragbaren Geräts unter Verwendung der ersten endgültigen Position und der Bewegungsdaten des an der ersten Basisstation empfangenen zweiten Funksignals zu bestimmen, nachdem bestimmt wurde, dass die zweite Basisstation das zweite Funksignal nicht erfolgreich empfangen hat.

Die aus dem Stand der Technik bekannten Systeme nutzen zum Teil eine Triangulation, d.h. die Auswertung von Signallaufzeiten zwischen dem ID-Geber und zwei verschiedenen an dem Fahrzeug an unterschiedlichen Orten verbauten Ultrabreitband-Sende- und Empfangseinrichtungen, beispielsweise Ultrabreitband-Sende- und Empfangsantennen, um den ID-Geber relativ zum Fahrzeug zu lokalisieren. Insbesondere im Innenraum ist dieses jedoch schwierig, da beispielsweise Ultrabreitbandkommunikation durch metallische Gegenstände blockiert wird.

Der Erfindung liegt daher die Aufgabe zugrunde, ein verbessertes System und ein verbessertes Verfahren zur Innen- und Außenerkennung für einen ID-Geber eines Fahrzeugs zu schaffen, mit denen zuverlässig ermittelt werden kann, ob ein ID-Geber sich im Innenraum eines Fahrzeugs befindet oder nicht. Ferner ist es Aufgabe der Erfindung, ein entsprechendes Fahrzeug zu schaffen.

Die Erfindung wird durch ein System mit den Merkmalen des Anspruchs 1 sowie ein Verfahren mit den Merkmalen des Patentanspruchs 8 sowie ein Fahrzeug mit den Merkmalen des Patentanspruchs 7 gelöst. Vorteilhafte Weiterbildungen ergeben sich aus den Unteransprüchen.

Der Erfindung liegt die Idee zugrunde, ein Eintreten und ein Verlassen des ID-Gebers in den Innenraum zu überwachen. Hierzu wird vor den Zugangsöffnungen zu dem Innenraum jeweils der Zugangsbereich vollständig von einem Kommunikationsbereich einer oder mehrerer Ultrabreitbandkommunikationseinrichtungen abgedeckt. Dies bedeutet, dass ein ID-Geber jeweils durch den Sende- und Empfangsbereich, welcher hier als Kommunikationsbereich bezeichnet wird, hindurchtreten muss, in den die Ultrabreitband-Sende- und Empfangseinrichtung Ultrabreitbandkommunikationsanfragen sendet, solange ein Durchqueren des Zugangsbereichs für einen ID-Geber zu erwarten ist. Der ID-Geber ist entsprechend ausgebildet und weist eine weitere Ultrabreitband-Sende- und Empfangseinrichtung auf, sodass der ID-Geber beim Durchqueren des Kommunikationsbereichs, der den Zugangsbereich zu der Fahrzeugöffnung abdeckt, eine Ultrabreitbandkommunikationsantwort an das Fahrzeug sendet. Hierdurch kann festgestellt werden, dass sich der ID-Geber in dem Zugangsbereich zu der Fahrzeugöffnung befindet. Zusätzlich ist es möglich, die Entfernung des ID-Gebers von der Ultrabreitband-Sende- und Empfangseinrichtung des Fahrzeugs, dem die Zugangsöffnung zugeordnet ist, zu ermitteln. Selbst wenn dies iterativ mehrmals nacheinander während des Durchquerens des Zugangsbereichs ausgeführt wird, d.h. mehrere Abstandswerte für aufeinanderfolgende Zeitpunkte des ID-Gebers von der Ultrabreitband-Sende- und Empfangseinrichtung ermittelt werden, lässt sich hieraus nicht eindeutig ableiten, ob ein ID-Geber in das Innere des Fahrzeugs gelangt ist oder aus dem Inneren des Fahrzeugs in den Außenbereich gelangt ist. Daher ist vorgesehen, zusätzlich Informationen über die Eigenbewegung des ID-Gebers an das Fahrzeug zu übermitteln und gemeinsam mit der Ultrabreitbandkommunikation auszuwerten. Die Eigenbewegung des ID-Gebers kann mittels einer Trägheitssensorik in dem ID-Geber ermittelt werden. Beispielsweise können Beschleunigungssensoren ausgewertet werden. Werden die ermittelten Beschleunigungswerte über die Zeit integriert, so kann eine Geschwindigkeit und aus der Integration der Geschwindigkeit über die Zeit eine zurückgelegte Strecke und somit beispielsweise ein Bahnsegment, welche die Bewegung des ID-Gebers im Raum über einen Zeitabschnitt darstellt, ermittelt werden. Um die Beschleunigungswerte, die in unterschiedliche Raumrichtungen wirken, zu unterschiedlichen Zeitpunkten korrekt auswerten zu können, ist es darüber hinaus notwendig, auch die Rotation des ID-Gebers im Raum gleichzeitig mit auszuwerten, sodass die ermittelten Beschleunigungen bezüglich eines ortsfesten Koordinatensystems oder eines mit dem ID-Geber gekoppelten Koordinatensystems angegeben werden können, dessen Achsrichtungen zumindest über einen gewissen Zeitraum von vorzugsweise mindestens mehreren Sekunden, vorzugsweise 1 Minute, vorzugsweise 10 Minuten, bezüglich eines ortsfesten Koordinatensystems dieselben Richtungen beibehalten. Ortsfest bedeutet hier auf einen Punkt an der Erdoberfläche bezogen. Ein mit dem ID-Geber gekoppeltes Koordinatensystem, dessen Achsrichtungen zumindest über einen Zeitraum gegenüber einem ortsfesten Koordinatensystem ihre Orientierung behalten, wird hier als Referenzkoordinatensystem bezeichnet.

Als Bahnsegment wird eine Menge von Daten bezeichnet, die angeben zu welchem Zeitpunkt sich eine Gegenstand an welcher Position befindet. Die Daten beziehen sich hierbei auf ein Koordinatensystem, welches nicht ortsfest sein muss. Jedoch beziehen sich die Positionsangaben alle immer auf dasselbe Koordinatensystem. Ein Bahnsegment lässt sich als Kurve in dem Koordinatensystem darstellen, bezüglich dessen es angegeben wird. Ein Bahnsegment gibt die somit die Bewegung des Gegenstands in der Vergangenheit an, d.h., für den Zeitraum, in dem die Bewegung des Körpers ermittelt wurde.

Man kann ein Bahnsegment als aus Bahnsegmentabschnitten zusammengesetzt auffassen. Die zeitlich nacheinander erfassten Bahnsegmentabschnitte, die für den jeweiligen Zeitabschnitt eine Bahnsegment darstellen, ergeben gemeinsam ein Bahnsegment für den Zeitraum der das erfassen aller Bahnsegmentabschnitte umfasst.

Lässt sich ein Bahnsegment bezüglich eines ortsfesten Koordinatensystems vollständig angeben, so wird ein Bahnsegment hier als Bahnkurve bezeichnet, anhand derer die Position des Gegenstand zu verschiedenen Zeitpunkten angegeben werden kann. Somit kann auch eine Geschwindigkeit und eine Bewegungsrichtung abgeleitet werden. Es ist nicht notwendig, dass eine Bahnkurve mittels einer Funktion angegeben werden kann.

Neben den Positionsdaten können auch Geschwindigkeitsangaben, Beschleunigungsangaben und Drehlageangaben in dem Bahnsegment enthalten sein, anhand derer die Positionen ermittelt sind.

Als Ultrabreitbandkommunikation wird das Übertragen von Signalen mit einer Bandbreite von mehr als 500 MHz oder mindestens 20 % des arithmetischen Mittelwerts von unterer und oberer Grenzfrequenz des gepulsten Frequenzbands bezeichnet. Hieraus resultiert, dass zeitlich ultrakurze Signalpulse ausgetauscht werden. Es existieren auch leicht abweichende Definitionen.

In einer einfachen Ausführungsform ist es zunächst nicht notwendig, die exakte Orientierung der einzelnen Achsen des Referenzkoordinatensystems bezogen auf das ortsfeste Koordinatensystem, beispielsweise ein mit dem Fahrzeug fest verbundenes Koordinatensystem, zu kennen. Die ermittelten Bahnsegmente können somit 3D-Kurven sein, die die Relativbewegung des ID-Gebers im Raum angeben. Da sich der ID-Geber ständig im Raum bewegt, bewegt sich mit dem ID-Geber der Ursprung des Referenzkoordinatensystems. Da die Rotation des ID-Gebers ausgewertet wird, können die Achsen des Referenzkoordinatensystems orientierungsstabil bezüglich eines mit dem in Ruhe befindlichen Fahrzeug starr verknüpften ortsfesten Referenzkoordinatensystems gehalten werden. Ein von dem ID-Geber ausgegebenes Bahnsegment gibt somit beispielsweise eine Bewegung in dem aktuellen mit dem ID-Geber verknüpften Referenzkoordinatensystem an, anhand dessen die Bewegung des Ursprungs eines ID-Geberkoordinatensystems für einen vorausgegangenen Zeitabschnitt angegeben ist. Als ID-Geberkoordinatensystem wird ein Koordinatensystem bezeichnet, dessen Achsen an die körperliche Gestalt des ID-Gebers gekoppelt sind. Dreht sich der ID-Geber im ortsfesten Koordinatensystem, dreht sich ebenfalls das ID-Geberkoordinatensystem. Das Referenzkoordinatensystem des ID-Gebers, d.h. dessen Achsen, drehen sich im ortsfesten Koordinatensystem nicht. Bei einer Translation des ID-Gebers im ortsfesten Koordinatensystem bewegen sich die Ursprünge beider mit dem ID-Geber gekoppelten Koordinatensysteme, des ID-Geberkoordinatensystems und des Referenzkoordinatensystems. Beispielsweise gibt das Bahnsegment somit für eine festgelegte Zeitspanne von beispielsweise 5 Sekunden, bevorzugter 10 Sekunden, noch bevorzugter 30 Sekunden oder eines längeren Zeitabschnitts die Schwerpunktbewegung des ID-Gebers an. Um die Orientierung der Achsen des ID-Geberkoordinatensystems relativ zu dem mit dem Fahrzeug fest verbundenen Koordinatensystem angeben zu können, ist es vorgesehen, dass das Fahrzeug und der ID-Geber jeweils eine Vektorfeldsensorik aufweisen, um zumindest von einem erdgebundenen Vektorfeld dessen lokale Richtung zu ermitteln, die als Bezugsrichtung für Koordinatenachsrichtungen verwendet wird, bezüglich derer die Informationen über die Eigenbewegung des ID-Gebers angegeben werden. Die Ausrichtung des Referenzkoordinatensystems des ID-Gebers wird über die lokale Richtung des Erdmagnetfelds in den Koordinaten des Referenzkoordinatensystems des ID-Gebers angegeben**,** sodass das Fahrzeug, welches die Richtung des Erdmagnetfelds ebenfalls bestimmen kann, hierüber die Achsrichtungen des Referenzkoordinatensystems in die eigenen Achsrichtungen des ortsfesten oder fahrzeuggebundenen Koordinatensystems umrechnen kann.

Die Vektorgröße ist eine Magnetfeldstärke des Erdmagnetfelds. Das Erdmagnetfeld lässt sich einfach und zuverlässig sowohl von der Sensorik des ID-Gebers als auch von entsprechender Sensorik des Fahrzeugs bestimmen. Lokale Störungen des Magnetfelds sind für beide Systeme nahezu gleich.

Die Informationen über die Eigenbewegung des ID-Gebers können über eine beliebige drahtlose Kommunikationseinrichtung mit dem Fahrzeug ausgetauscht werden. Als besonders vorteilhaft hat es sich erwiesen, die Informationen über die Eigenbewegung des ID-Gebers mittels der Ultrabreitbandkommunikation von dem ID-Geber zu dem Fahrzeug zu übermitteln. Diese Kommunikation findet ohnehin statt, sodass hierbei auch die entsprechenden Informationen über die Eigenbewegung ausgetauscht werden können.

Andere Ausführungsformen können jedoch vorsehen, dass die Informationen über die Eigenbewegung des ID-Gebers über eine andere Kommunikationsart, beispielsweise eine Niederfrequenzkommunikation (LF-Kommunikation) oder eine Hochfrequenzkommunikation (HF-Kommunikation) mit dem Fahrzeug ausgetauscht werden. Eine Ausführungsform der Erfindung sieht daher vor, dass die Informationen über die Eigenbewegung des ID-Gebers mittels einer von der Ultrabreitbandkommunikation verschiedenen drahtlosen Kommunikation übermittelt werden. Alle bekannten drahtlosen Kommunikationsarten, wie Bluetooth, WLAN etc., können genutzt werden.

Um eine vollständige Abdeckung eines Zugangsbereichs zu einer Zugangsöffnung durch einen Kommunikationsbereich des Fahrzeuginnenraums zu erreichen, hat es sich als vorteilhaft erwiesen, dass die mindestens eine der einen oder mehreren Ultrabreitband-Sende- und Empfangseinrichtungen, die einer der Zugangsöffnungen zugeordnet ist, jeweils an einer Tür oder Klappe angeordnet ist, die zum Verschießen der jeweiligen Zugangsöffnung vorgesehen ist. Hierdurch kann auf einfache und zuverlässige Weise beim Öffnen der entsprechenden Tür oder Klappe dafür gesorgt werden, dass der Zugangsbereich zu der Zugangsöffnung vollständig von dem Kommunikationsbereich, d.h. dem Bereich, in dem zwischen einem ID-Geber und der entsprechenden an der Tür oder der Klappe angeordneten Ultrabreit-Sende- und Empfangseinrichtung eine Ultrabreitbandkommunikation ausgeführt werden kann.

Um auch zusätzlich ein Eintreten oder Verlassen des ID-Gebers in den Innenraum des Fahrzeugs überwachen zu können, wenn zwar die Fahrzeugtür oder -klappe geschlossen ist, diese jedoch ein öffenbares Fenster umfasst, das geöffnet ist, ist die mindestens eine der einen oder mehrere Ultrabreitband-Sende- und Empfangseinrichtungen, die an einer Tür oder Klappe angeordnet ist, d.h. an einer zum Verschließen der jeweiligen Zugangsöffnung vorgesehenen Komponente, in einem Bereich eines Fensters oder angrenzend an das Fenster der Komponente bzw. der Tür oder der Klappe angeordnet. Auch in den Fällen, in denen das Fenster nicht öffenbar ist, kann eine Anordnung im Bereich des Fensters oder an dem Fenster vorteilhaft sein. Fenstermaterialien behindern eine Ausbreitung der elektromagnetischen Strahlung, die zur Ultrabreitbandkommunikation verwendet werden, nicht oder fast nicht. Daher kann die Strahlung durch das Fenster hindurchdringen. Somit kann auf beiden Seiten der Tür zeitgleich mit derselben Ultrabreitband-Sende- und Empfangseinrichtung die Umgebung auf ein Vorhandensein des ID-Gebers überwacht werden.

Erfindungsgemäß ist vorgesehen, dass bei der Ultrabreitbandkommunikation aus zeitlichen Abständen zwischen Aussendungen der Ultrabreitbandkommunikationsanfragen und dem Empfangen einer darauffolgenden Ultrabreitkommunikationsantwort räumliche Abstände des ID-Gebers von der Ultrabreitband-Sende- und Empfangseinrichtung, in deren Kommunikationsbereich sich der ID-Geber befindet, ermittelt werden und hieraus die Bewegung des ID-Gebers durch den Zugangsbereich gemeinsam mit den übertragenen Informationen über die Eigenbewegung des ID-Gebers ermittelt und/oder optional auch plausibilisiert werden. Erfindungsgemäß ist vorgesehen, dass die Informationen über die Eigenbewegung Daten eines Bahnsegments der Bewegung des ID-Gebers enthalten oder aus den Informationen über die Eigenbewegung ein Bahnsegment der Bewegung des ID-Gebers ermittelt wird und das Bahnsegment anhand der ermittelten Abstandspositionen relativ zum Zugangsbereich als Bahnkurve positioniert wird und das Eintreten in den Innenraum festgestellt wird, wenn die Bahnkurve durch den Zugangsbereich in den Innenraum weist, und das Verlassen des Innenraums festgestellt wird, wenn die Bahnkurve aus dem Innenraum durch den Zugangsbereich nach außen weist.

Da ein Abstand zwischen der Ultrabreitband-Sende- und Empfangseinrichtung und dem ID-Geber die Position relativ zu der Ultrabreitband-Sende- und Empfangseinrichtung nur auf ein Kugelschalensegment eingrenzt, kann die eigentliche Bahnkurve der Bewegung des ID-Gebers anhand der Abstände gar nicht oder nur sehr ungenau bestimmt werden. Trotzdem lässt sich häufig schon anhand der Abstände feststellen, ob der ID-Geber sich in den Innenraum des Fahrzeugs bewegt und in diesen eintritt oder den Innenraum verlässt.

Während bei einem Bahnsegment nur die Relativbewegung bezüglich eines Referenzkoordinatensystems bekannt ist, dessen Orientierung gegebenenfalls sogar bezüglich des mit dem Fahrzeug festgekoppelten Koordinatensystems bekannt ist, dessen Ursprungsposition jedoch noch unbekannt ist, kann durch die Verwendung der aus den zeitlichen Abständen zwischen den Aussendungen der Ultrabreitbandkommunikationsanfragen und darauf empfangenen Ultrabreitbandkommunikationsantworten unter Berücksichtigung der Ausbreitungsgeschwindigkeit der elektromagnetischen Strahlung auf räumliche Abstände zu der Ultrabreitband-Sende- und Empfangseinrichtung geschlossen werden. Da ein Abstand die Position des ID-Gebers nur auf einer Kugelschale relativ zu der Position der Ultrabreitband-Sende- und Empfangseinrichtung festlegt, lässt sich auch hierüber ein Bahnsegment noch nicht eindeutig im Raum verorten. Werden jedoch im zeitlichen Verlauf mehrere Abstände analysiert und mit den entsprechenden Positionen der Bahnsegmente, die zu denselben Zeiten korrespondieren, in Beziehung gesetzt, so lässt sich aus einem ermittelten Bahnsegment eine Bahnkurve ermitteln, d.h. das Bahnsegment relativ zum Zugangsbereich positionieren. Weist die Bahnkurve, die sich hieraus ergibt, in den Innenraum des Fahrzeugs, so kann hieraus geschlossen werden, dass der ID-Geber in den Innenraum des Fahrzeugs eintritt. Weist die Bahnkurve hingegen aus dem Innenraum hinaus, so kann auf das Verlassen des ID-Gebers aus dem Innenraum geschlossen werden. Eine Richtung der Bahnkurve ist dadurch gegeben, dass den einzelnen Positionen des Bahnsegments jeweils eine Zeit zugeordnet ist, zu der sich der ID-Geber an der entsprechenden Position befunden hat.

Nutzt man jedoch zusätzlich zu den Abständen die Informationen über die Eigenbewegung des ID-Gebers, die dieser selbst ermittelt hat, so können daraus abgeleitete Bahnsegmente gegenüber den ermittelten Abständen plausibilisiert werden. Geprüft werden kann beispielsweise, ob die in einem Bahnsegment zu unterschiedlichen Zeitpunkten auftretenden Positionen des ID-Gebers mit ermittelten Abständen des ID-Gebers zu diesen Zeitpunkten unter Berücksichtigung, dass die Abstände nur bis auf eine Kugelschale bekannt sind, übereinstimmen.

Eine Aktivierung der Ultrabreitband-Sende- und Empfangseinrichtung findet bei einer bevorzugten Ausführungsform dann statt, wenn eine Komponente, welche eine Zugangsöffnung des Fahrzeuginnenraums verschließt, geöffnet wird. Die Ultrabreitband-Sende- und Empfangseinrichtung oder die mehreren Ultrabreitband-Sende- und Empfangseinrichtungen, die notwendig sind, um den Zugangsbereich vollständig mit ihren Kommunikationsbereichen abzudecken, werden in einem solchen Fall aktiviert.

Ebenfalls ist es vorteilhaft, eine Ultrabreitband-Sende- und Empfangseinrichtung dann zu aktivieren, wenn bei einer geschlossenen Komponente, die eine Zugangsöffnung verschließt, beispielsweise einer Fahrzeugtür, wenn eine Annäherung an die noch im geschlossenen Zustand befindliche Komponente erkannt wird. Beispielsweise kann in einer solchen Fahrzeugkomponente eine Annäherungssensorik enthalten sein.

Ferner ist es vorteilhaft, die Position des ID-Gebers, insbesondere anhand der von dem ID-Geber ermittelten Informationen über die Eigenbewegung, im Innenraum weiter zu überwachen. Wir für den ID-Geber eine Position ermittelt, die ein Verlassen des Innenraums anzeigt oder eine Bewegung auf eine Grenze des Innenraum zu festgestellt, so wird oder werden bei einer bevorzugten Ausführungsform eine oder mehrere der Ultrabreitband- Sende- und Empfangseinrichtungen aktiviert, um ein Verlassen des ID-Gebers zu plausibilisieren.

Grundsätzlich kann es vorgesehen sein, die auf Basis der von dem ID-Geber selbst gelieferten Informationen über dessen Eigenbewegung ermittelten Daten, beispielsweise ein Bahnsegment oder sogar eine Bahnkurve, mit jenen zu vergleichen, die anhand der Ultrabreitbandkommunikation abgeleitet sind, beispielsweises der ermittelten Abstände des ID-Gebers von einer der Ultrabreitband-Sendes und Empfangseinrichtungen. Beispielsweise kann ein Konfidenzniveau ermittelt werden, welches angibt, ob das Bahnsegment oder dessen Bahnsegmentabschnitte, mir den ermittelten Abstandswerten kompatibel ist bzw. sind. Deutet das Bahnsegment an, dass der ID-Geber den Innenraum verlassen hat und ist ein vorgegebener Schwellenwert durch den Konfidenzwert überschritten, so wird beispielsweise das Innenraumsignal geändert, so dass das Verlassen des Innenraums für andere Fahrzeugsteuereinrichtungen signalisiert wird. Auch in Situationen in denen zu unterschiedlichen Zeitpunkten vorliegende Bahnsegmente oder-abschnitte nicht im Raum bzw. einem mit dem Fahrzeug verknüpften Koordinatensystem verortet und somit in eine Bahnkurve überführt werden können, kann so eine zuverlässige Aussage über eine Eintreten und/oder Verlassen des Innenraums durch den ID-Geber erkannt werden.

Nachfolgend wird die Erfindung unter Bezugnahme auf eine Zeichnung näher erläutert. Hierbei zeigen:
- Fig. 1a: eine schematische Draufsicht auf ein Fahrzeug;
- Fig. 1b: eine schematische Seitenansicht eines Fahrzeugs;
- Fig. 1c: eine Rückansicht eines Fahrzeugs;
- Fig. 1d: eine schematische Seitenansicht eines Fahrzeugs mit geöffneter Heckklappe;
- Fig. 2a: eine schematische Draufsicht auf ein Fahrzeug mit einer geöffneten linken Vordertür;
- Fig. 2b: eine Rückansicht eines Fahrzeugs mit einer geöffneten linken Vordertür;
- Fig. 3a-3f: schematische Darstellungen der Erfassung der Eigenbewegung eines ID-Gebers während eines Ausstiegsvorgangs durch eine linkere vordere Fahrzeugtür;
- Fig. 4a-4f: schematische Darstellungen der zu den unterschiedlichen Zeitpunkten ermittelten Informationen über die Eigenbewegung und die daraus abgeleiteten Bahnsegmente;
- Fig. 5a-5f: die zu den unterschiedlichen Zeitpunkten ermittelten Abstände der Ultrabreitband-Sende- und Empfangseinrichtung von dem ID-Geber;
- Fig. 6a-6f: eine schematische Darstellungen des Zugangsbereichs und Anpassungen der ermittelten Bahnsegmente an die ermittelten Abstände, um aus den Bahnsegmenten Bahnkurven zu bilden und einen Eintritt bzw. ein Verlassen des ID-Gebers aus dem Innenraum festzustellen.

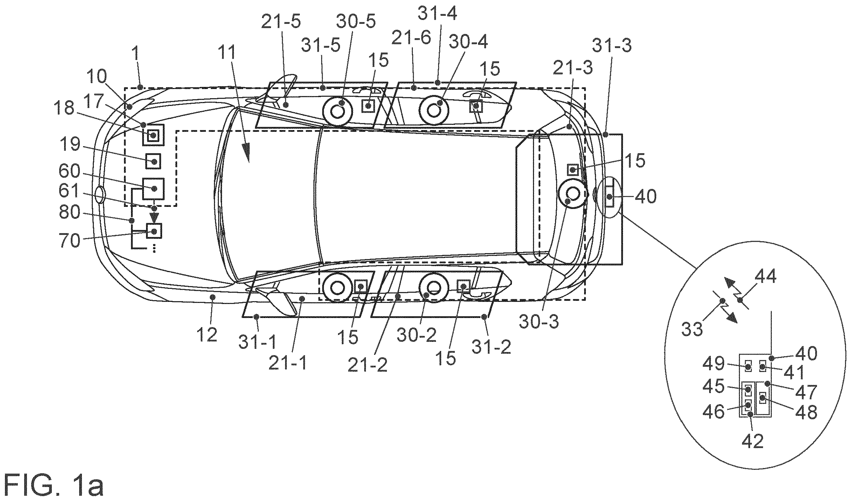

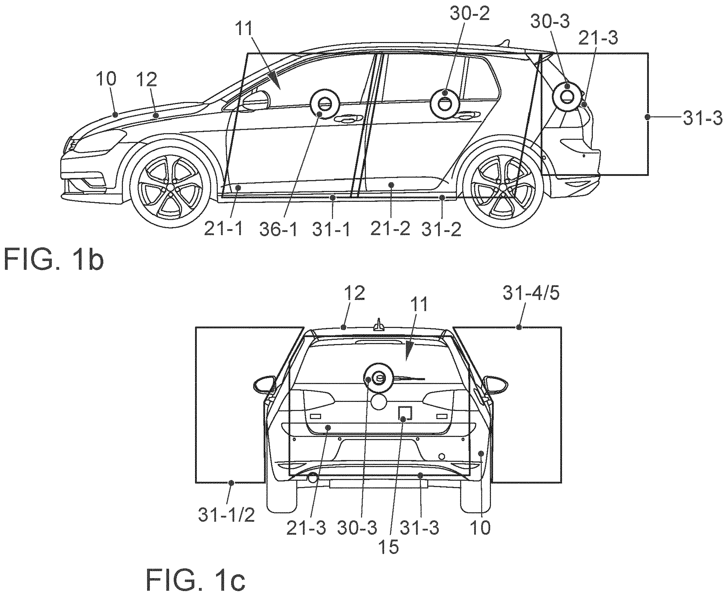

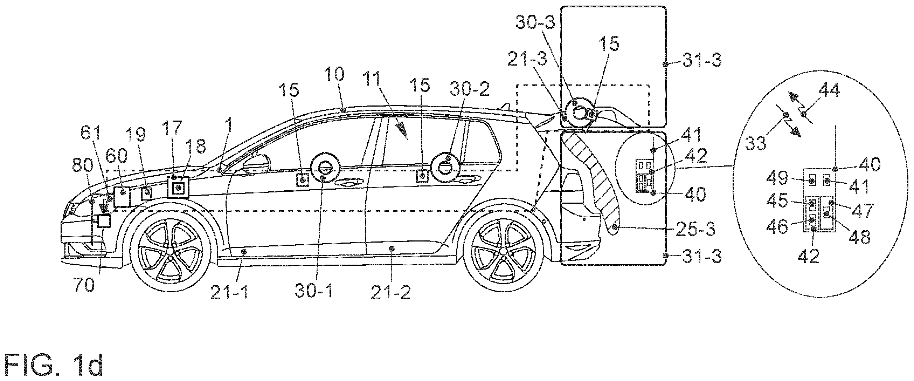

In Fig. 1 ist schematisch die Draufsicht auf ein Fahrzeug 10 mit einem System 1 zur Innen- und Außenraumerkennung dargestellt. Ein Innenraum 11 des Fahrzeugs ist von der Karosserie 12 vollständig umschlossen. Das dargestellte Fahrzeug besitzt Zugangsöffnungen 20. Diese befinden sich vorne links 20-1, hinten links 20-2, hinten 20-3, hinten rechts 20-4 und vorne rechts 20-5. Nachstellungen der Form 20-x, wobei x eine natürliche Zahl ist, werden verwendet, um gleiche technische Merkmale in einem Gegenstand zu unterscheiden und über einen Zählindex zu identifizieren. Die Zugangsöffnungen 20 sind im dargestellten Zustand des Fahrzeugs alle verschlossen. Vor jeder der Zugangsöffnungen 20 befindet sich eine Fahrzeugkomponente 21, die sich in einem geschlossenen und einem geöffneten Zustand befinden kann. Vor der Zugangsöffnung vorne links ist die vordere linke Tür 21-1 angeordnet und verschließt diese Zugangsöffnungen vorne links 20-1. Entsprechend sind die anderen Zugangsöffnungen 20-x durch eine linke hintere Tür 21-2, durch eine Heckklappe 21-3, durch eine hintere rechte Tür 21-4 und durch eine vordere rechte Tür 21-5 verschlossen.

An jeder der Komponenten 21, die eine der Zugangsöffnungen 20 verschließt, ist eine Ultrabreitband-Sende- und Empfangseinrichtung 30 angeordnet. Die Indizes der Ultrabreitband-Sende- und Empfangseinrichtungen 30-1 bis 30-5 korrespondieren mit den entsprechenden Zugangsöffnungen bzw. den diese Zugangsöffnungen 20-1 bis 20-5 verschließenden Fahrzeugkomponenten 21-1 bis 21-5.

In Fig. 1 sind ferner Kommunikationsbereiche 31-x außerhalb des Fahrzeugs 10 für die einzelnen Ultrabreitband-Sende- und Empfangseinrichtungen 30-x eingezeichnet. Die Ultrabreitband-Sende- und Empfangseinrichtungen 30-x sind jeweils so ausgebildet, dass sie in ihren entsprechenden Kommunikationsbereich 31-x in einem aktiven Zustand Ultrabreitbandkommunikationsanfragen senden. Befindet sich ein ID-Geber 40 beispielsweise im Kommunikationsbereich 31-3 der Ultrabreitband-Sende- und Empfangseinrichtung 30-3 der Heckklappe 21-3, so beantwortet eine weitere Ultrabreitband-Sende- und Empfangseinrichtung 41 des ID-Gebers 40 die Ultrabreitbandkommunikationsanfrage 33 mit einer Ultrabreitbandkommunikationsantwort 44. Durch den Austausch einer Vielzahl von Breitbandkommunikationsnachrichtungen, worunter die Breitbandkommunikationsanfrage 33 und die Breitbandkommunikationsantwort 44 ebenfalls zu fassen sind, können auch Informationen von dem ID-Geber 40 zu dem Fahrzeug 10 übertragen werden.

Beispielsweise erkennt das Fahrzeug 10 über einen Annäherungssensor 15, dass ein Nutzer (nicht dargestellt) sich mit dem ID-Geber 40 an das Fahrzeug 10 im Bereich der Heckklappe 21-3 annähert. Hieraufhin wird die Ultrabreitbandkommunikation durch die Ultrabreitband-Sende- und Empfangseinrichtung 30-3 begonnen und die entsprechenden Daten ausgetauscht. Hierbei wird beispielsweise eine Identifikationsnummer abgefragt, die den ID-Geber 40 gegenüber dem Fahrzeug 10 als berechtigt identifiziert, die Heckklappe 21-3 zu entriegeln.

In Fig. 1b und Fig. 1c sind das Fahrzeug von der linken Seite bzw. von hinten schematisch dargestellt. Gleiche technische Merkmale sind mit denselben Bezugszeichen in allen Figuren bezeichnet.

In Fig. 1d ist das Fahrzeug 10 mit geöffneter Heckklappe 21-3 dargestellt. Die Zugangsöffnung 20-3 ist nun offen. Ein Zugangsbereich 25-3, den ein Gegenstand durchqueren muss, um in den Innenraum 11 des Fahrzeugs 10 zu gelangen, ist vollständig von dem Kommunikationsbereich 31-3 der Ultrabreitband-Sende- und Empfangseinrichtung 30-3 der Heckklappe 21-3 überdeckt. Aus dem zeitlichen Abstand zwischen dem Aussenden einer Ultrabreitbandkommunikationsanfrage und der darauffolgenden Ultrabreitbandkommunikationsantwort seitens des ID-Gebers 40 kann das Fahrzeug 10 einen Abstand des ID-Gebers von der Ultrabreitband-Sende- und Empfangseinrichtung 30-3 ermitteln. Hierbei wird die Ausbreitungsgeschwindigkeit elektromagnetischer Strahlung und die Zeitspanne zwischen dem Aussenden und der Ultrabreitbandkommunikationsanfrage und dem Empfangen der Ultrabreitbandkommunikationsantwort verwendet. Da die Ultrabreitbandkommunikationsanfragen iterativ ausgesendet werden, werden somit im zeitlichen Verlauf eine Vielzahl von Abständen ermittelt.

Zusätzlich ist der ID-Geber 40 mit einer Trägheitssensorik 42 ausgerüstet, die über Beschleunigungssensoren 45 Eigenbewegungen des ID-Gebers erfassen kann. Zusätzlich umfasst die Trägheitssensorik 42 Drehlagesensoren 46, die Drehlageänderungen des ID-Gebers 40 in allen Raumrichtungen erfassen können. Hierdurch ist es möglich, anhand der erfassten Beschleunigungen eine Geschwindigkeit des ID-Gebers 40 und hieraus Bahnsegmente des ID-Gebers 40 zu ermitteln. Zusätzlich weist der ID-Geber 40 eine Vektorfeldsensorik 47 auf, die eine Richtung einer Feldgröße, beispielsweise die Richtung des Magnetfelds, bestimmen kann. Hierdurch ist es möglich, dass die Angaben über die Eigenbewegung des ID-Gebers 40 auf eine zumindest auf einer Zeitskale, die Ein- und Aussteigvorgänge deutlich übersteigt, konstanten äußeren Vektorrichtung bezogen werden können. Die Vektorfeldsensorik 47 umfasst beispielsweise einen Magnetfeldsensor 48. Auch das Fahrzeug 10 weist eine Vektorfeldsensorik 17, beispielsweise mit einem Magnetfeldsensor einer Magnetfeldsensorik 18, auf, mit der das Fahrzeug die Richtung eines Vektorfelds, beispielsweise des Erdmagnetfelds, bestimmen kann.

Der ID-Geber 40 ist ausgebildet, die anhand der Trägheitssensorik 42 erfassten Informationen über die Eigenbewegung des ID-Gebers 40 an das Fahrzeug 10 zu übermitteln. Dies erfolgt beispielsweise über die Ultrabreitbandkommunikation, kann jedoch auch über eine andere drahtlose Kommunikationsschnittstelle 19/49 erfolgen. Dieses kann beispielsweise eine Niederfrequenzschnittstelle (LF-Schnittstelle) oder über eine Hochfrequenzschnittstelle (HF-Schnittstelle) erfolgen, wie sie üblicherweise im Stand der Technik für die Kommunikation zwischen Fahrzeugen 10 und ID-Gebern 40 bereits verwendet werden. Auch das Austauschen einer Identifikationsnummer, um den ID-Geber 40 gegenüber dem Fahrzeug 10 zu identifizieren, kann über eine solche andere Kommunikationsschnittstelle 19/49 erfolgen.

Die von dem ID-Geber 40 übermittelten Informationen über die Eigenbewegung werden von dem Fahrzeug 10 gemeinsam mit räumlichen Abstandsinformationen, die aus der Ultrabreitbandkommunikation ermittelt sind, ausgewertet, um festzustellen, ob sich der ID-Geber 40 durch den Zugangsbereich 25-3 der hinteren Zugangsöffnung 20-3 in den Innenraum 11 des Fahrzeugs 10 bewegt. Ist dies festgestellt, so wird ein Innenraumsignal 61 von der Steuereinrichtung 60 bereitgestellt, welches angibt, dass sich der ID-Geber 40 im Innenraum 11 des Fahrzeugs 10 befindet. Dieses Innenraumsignal 61 kann von anderen Steuergeräten 70 , denen das Innenraumsignal 61 beispielsweise über einen Fahrzeugbus 80 bereitgestellt wird, ausgewertet werden, um beispielsweise das Starten einer Antriebsmaschine zu gestatten oder zu unterbinden, wenn das Innenraumsignal 61 anzeigt, dass der ID-Geber 40 nicht im Innenraum 11 des Fahrzeugs 10 vorhanden ist, oder kein Innenraumsignal 61 zu Verfügung steht.

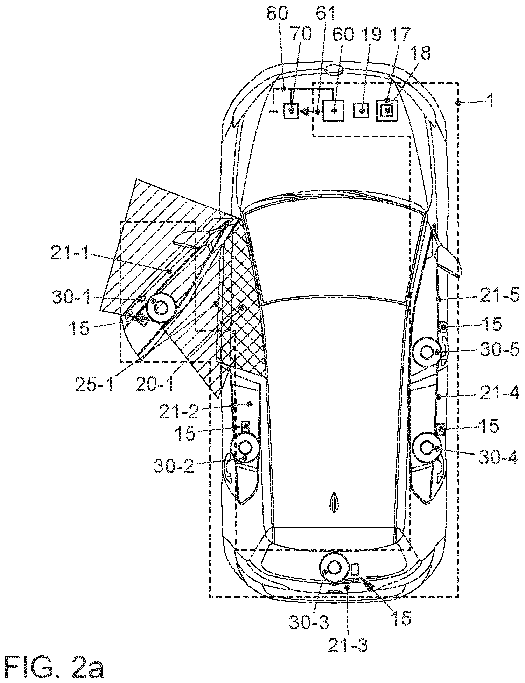

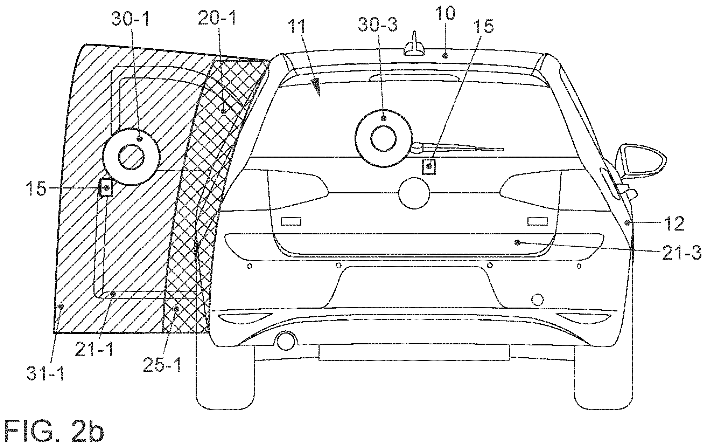

In Fig. 2a und Fig. 2b sind jeweils entsprechend eine Draufsicht und eine Rückansicht einer Situation des Fahrzeugs 10 gezeigt, die sich bei einer geöffneten vorderen linken Fahrzeugtür 21-1 ergibt. Entsprechende gleiche technische Merkmale sind in allen Figuren mit identischen Bezugszeichen versehen. Gut zu erkennen sind der Kommunikationsbereich 31-1 der Ultrabreitband-Sende- und Empfangseinrichtung 30-1 sowie der Zugangsbereich 25-1, der vollständig von dem Kommunikationsbereich 30-1 überdeckt ist. Der Zugangsbereich 25-1 erstreckt sich über die gesamte Zugangsöffnung 20-1 der vorderen linken Fahrzeugöffnung 20-1, die im geschlossenen Zustand von der vorderen linken Fahrzeugtür 21-1 verschlossen wird.

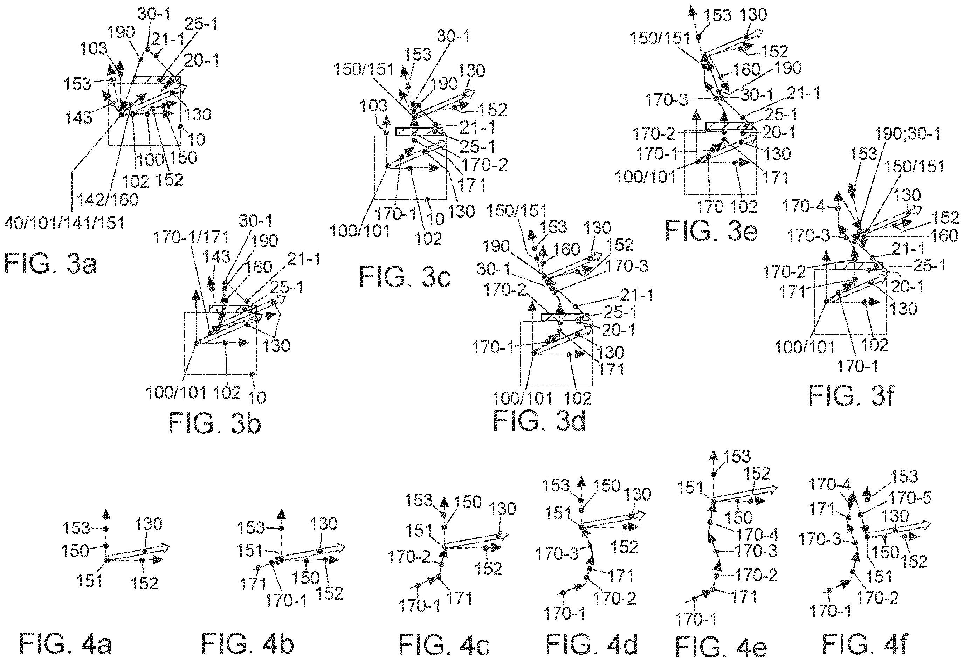

Anhand der Fig. 3a-3f sowie Fig. 4a-4f, Fig. 5a-5f und Fig. 6a-6f soll die Ermittlung der Eigenbewegung des ID-Gebers bei einem Ausstieg aus einem Fahrzeug durch eine linke vordere Fahrzeugtür exemplarisch und vereinfacht erläutert werden. In den Fig. 3a-3f ist jeweils schematisch ein Fahrzeug 10 dargestellt, dessen linke vordere Fahrzeugtür 21-1 geöffnet ist, sodass die Zugangsöffnung 20-1 vorne links im Fahrzeug 10 geöffnet ist. Mit dem Fahrzeug 10 ist ein Fahrzeugkoordinatensystem 100, dessen Ursprung auf einer Mittelachse des Fahrzeugs befindlich ist, gekoppelt. Eine X-Achse 102 zeigt in Fahrtrichtung und eine senkrecht hierzu orientierte Y-Achse 103 zur linken Fahrzeugseite. Aus Gründen der Vereinfachung ist die dritte Raumrichtung, die Z-Achse, die aus der Bildebene hinausweist, nicht eingezeichnet und wird in der nachfolgenden Erklärung nicht weiter berücksichtigt, obwohl es sich für den Fachmann versteht, dass das Beschriebene im dreidimensionalen Raum stattfindet und die dritte Dimension, in diesem Falle eine Z-Richtung, zusätzlich im realen Fall zu berücksichtigen ist.

Ein ID-Geber 40 besitzt ein mit der körperlichen Gestalt des ID-Gebers festgekoppeltes ID-Geberkoordinatensystem 140, dessen X-Achse 142 und dessen Y-Achse 143 in Fig. 3a schematisch dargestellt sind. Aus Gründen der Vereinfachung ist der ID-Geber 40 selbst nicht körperlich dargestellt. In Fig. 3a ist ferner der Richtungsvektor 130 des Erdmagnetfelds als Doppelpfeil dargestellt. Dieser behält gegenüber dem Fahrzeugkoordinatensystem 100, da sich das Fahrzeug 10 in Ruhe befindet, immer dieselbe Orientierung. Diese Orientierung im Fahrzeugkoordinatensystem wird vom Fahrzeug mittels einer entsprechenden Magnetsensorik 18 (vergleiche Fig. 1) gemessen. Ebenso bestimmt die Magnetsensorik 48 des ID-Gebers 40 (vergleiche Fig. 1) die Richtung des Richtungsvektors 130 des Erdmagnetfelds.

Um eine anhand der Trägheitssensorik 42 ermittelte Eigenbewegung des ID-Gebers im Raum ermitteln und angeben zu können, ist mit dem ID-Geber 40 ein weiteres hinsichtlich des Ursprungs bewegliches, jedoch hinsichtlich der Achsenorientierungen "ortsfestes" oder "orientierungsfestes" Koordinatensystem verknüpft. Dieses wird als ID-Geberreferenzkoordinatensystem 150 oder auch verkürzt als Referenzkoordinatensystem bezeichnet. Dessen X- und Y-Achse 152 und 153 weisen eine feste Orientierung bezogen auf den ermittelten Richtungsvektor 130 des Erdmagnetfelds auf, der jeweils vom Ursprung 152 des ID-Geberreferenzkoordinatensystems 150 ebenfalls als Doppelpfeil abgetragen ist.

In den Fig. 3a-3f ist jeweils über einem gepunkteten Bewegungspfeil 160 die Bewegungsrichtung des ID-Gebers und über eine Länge dieses Bewegungspfeils 160 die Strecke angegeben, die der ID-Geber 40 bis zum nächsten Zeitpunkt der Ausstiegshandlung zurücklegt, der in der darauffolgenden Figur dargestellt ist. Die Fig. 3a-3f zeigen die Ausstiegssituation zu aufeinanderfolgenden zeitlich gleich beabstandeten Augenblicken. Hierbei wird angenommen, dass der aktuelle Bewegungspfeil 160 zugleich die Orientierung des ID-Gebers und somit die Richtung der X-Achse des fest mit der körperlichen Gestalt des ID-Gebers 40 verknüpften ID-Geberkoordinatensystems 140 anzeigt. Aus Gründen der Übersichtlichkeit ist daher in allen weiteren Figuren 3b bis 6f das ID-Geberkoordinatensystem nicht dargestellt. Dessen Lage lässt sich jedoch anhand des jeweils eingetragenen Bewegungspfeils 160 leicht ermitteln.

Der ID-Geber 40 selbst kennt die Position des Ursprungs 141 des ID-Geberkoordinatensystems 140 und auch die Position des Ursprungs 151 des ID-Geberreferenzkoordinatensystems 150 im Raum, d.h. bezogen auf das Fahrzeugkoordinatensystem 100, nicht. Der Ursprung 151 des ID-Geberreferenzkoordinatensystems 150 bewegt sich somit mit dem ID-Geber 40, sodass der Ursprung 151 des ID-Geberreferenzkoordinatensystems 150 immer mit einer festen Position in dem ID-Geber, beispielsweise dessen Schwerpunkt, zusammenfällt. In den Figuren kann somit die Position des ID-Gebers 40 anhand des Ursprungs 151 des ID-Geberreferenzkoordinatensystems 150 ausgelesen werden. Die Orientierung kann zu jedem Zeitpunkt anhand des eingezeichneten Bewegungspfeils 160 erkannt werden. Es versteht sich für den Fachmann, dass dies eine Vereinfachung ist, die hier nur zum Zwecke der Darstellung und Erläuterung gewählt ist. In der Realität kann sich der ID-Geber in jede beliebige Richtung bezogen auf dessen Achsen bewegen, d.h. sich gegenüber der Bewegungsrichtung verdrehen. Die Trägheitssensorik 42 (vergleiche Fig. 1) des ID-Gebers 40 ermittelt jedoch anhand dieser Drehungen und anhand der Beschleunigungen eine Bewegung in dem ID-Geberreferenzkoordinatensystem 150. Die zurückgelegte Bewegung wird als Bahnsegmentabschnitt 170-n abgetragen, wobei n eine natürliche Zahl ist und die Bahnsegmentabschnitte 170 in zeitlicher Abfolge nummeriert. Der jeweils zuletzt zurückgelegte Bahnsegmentabschnitt 170 weist auf den Ursprung 151 des ID-Geberreferenzkoordinatensystems 150. Der in den Fig. 3a-3f dargestellte Ablauf ist somit wie folgt:
Zunächst bewegt sich ein Nutzer mit dem ID-Geber seitlich nach vorne links, dann nach links aus dem Fahrzeug und durchquert den Zugangsbereich 25-1. Er bewegt sich leicht nach links rückwärts, anschließend nach links, wendet und bewegt sich auf die geöffnete Fahrzeugtür wieder zu und würde in einem nächsten Schritt, dessen Ergebnis nicht mehr dargestellt ist, die Fahrzeugtür durch eine Bewegung nach rechts schließen.

In den Fig. 4a-4f sind jetzt jeweils die Informationen schematisch dargestellt, die der ID-Geber an das Fahrzeug übermitteln kann. Zum einen wird angegeben, wie die der Richtungsvektor 130 des Erdmagnetfelds in dem ID-Geberreferenzkoordinatensystem 150 orientiert ist. Anhand dieser Angaben kann das Fahrzeug die Orientierung des ID-Geberreferenzkoordinatensystems 150 relativ zum eigenen Fahrzeugkoordinatensystem 100 feststellen, da es die Vektorrichtung 130 des Erdmagnetfelds in dem Fahrzeugkoordinatensystem 100 aus eigenen Messungen kennt. Zusätzlich liefert der ID-Geber 40 Bahnsegmentinformationen, welches nur Beschleunigungswerte entlang der einzelnen Achsrichtung des ID-Geberreferenzkoordinatensystems sein können oder Beschleunigungsangaben bezüglich des nicht dargestellten ID-Geberkoordinatensystems sowie die Drehwinkel bezüglich der Vektorrichtung des Erdmagnetfelds. Bei der hier dargestellten Ausführungsvariante wird davon ausgegangen, dass der ID-Geber 40 selbst Bahnsegmentabschnitte 170-n und/oder Bahnsegmente 171 anhand dieser Beschleunigungs- und Drehwinkelinformationen ermittelt und bezüglich des ID-Geberreferenzkoordinatensystems 150 bereitstellt. Bei alternativen Ausführungsformen kann diese Ermittlung vom Fahrzeug selbst in dessen Steuereinrichtung 60 erfolgen (vergleiche Fig. 1). Gut zu erkennen ist, dass sich aus den Bahnsegmentabschnitten 170-n jeweils ein Bahnsegment 171 ergibt. Dessen Lage im Raum lässt sich für das Fahrzeug jedoch auch dann nicht exakt ermitteln, wenn der Richtungsvektor 130 parallel zum Richtungsvektor 130 im Fahrzeugkoordinatensystem 100 ausgerichtet würde. In Fig. 4a bis 4f ist das ID-Geberreferenzkoordinatensystem 150 jeweils so ausgebildet, dass die x-Achse 152 auf dem Zeichnungsblatt horizontal ausgerichtet ist.

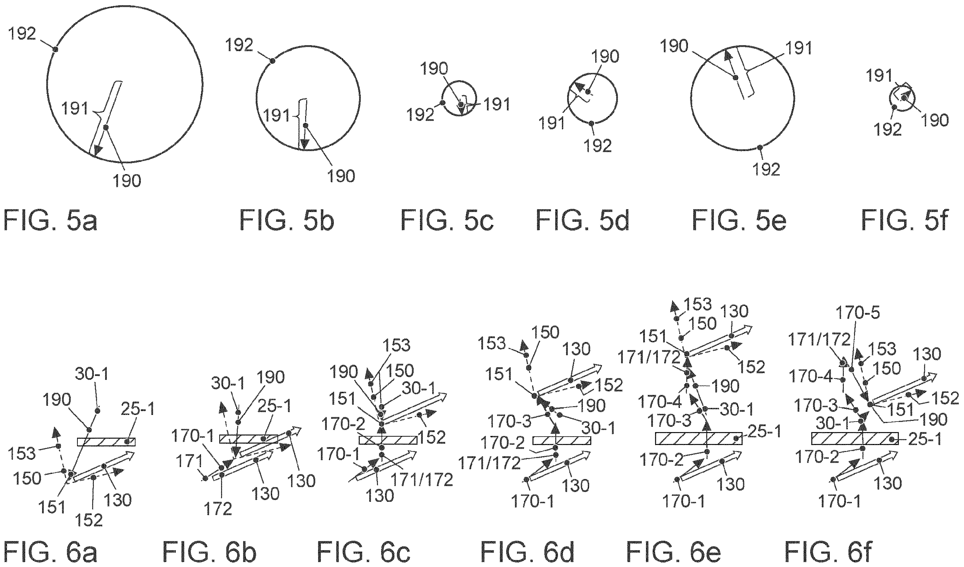

In Fig. 5a-5f sind die Abstandsvektoren 190 des ID-Gebers 40 von der Ultrabreitband-Sende- und Empfangseinrichtung 30-1 der Linken Vordertür eingetragen, die an dem äußeren offenen Ende der linken vorderen Fahrzeugtür 21-1 angeordnet ist. Die Richtung im Raum ist dem Fahrzeug 10 jedoch nicht bekannt, sondern nur der Abstand, welcher in der dargestellten zweidimensionalen Ebene einem Kreis oder Kreisbogenabschnitten 192 entspricht. Im dreidimensionalen Fall wäre dies eine Kugelschale oder ein Kugelschalensegment, was durch den ermittelten Abstand 191 zwischen der Ultrabreitband-Sende- und Empfangseinrichtung 30-1 und dem ID-Geber 40 festgelegt ist.

Kombiniert man jedoch beide Angaben, d.h. die ermittelten Abstände zu den unterschiedlichen Zeitpunkten und die Bahnsegmentangaben, die neben der Angabe der durchlaufenen Orte auch die Angaben über die Zeitpunkte enthalten, zu denen die entsprechenden Orte relativ zueinander durchlaufen wurde, ist es möglich, die einzelnen Bahnsegmente 171 im Raum, d.h. bezogen auf das Koordinatensystem des Fahrzeugs, zu lokalisieren. Dieses ist in den Fig. 6a-6f gezeigt. Es sind die korrekt ermittelten Ergebnisse der entsprechenden Auswertung dargestellt. Sind nur wenige Datenpunkte bekannt, so kann es Zweideutigkeiten geben. Bei einer Vielzahl von Messzeitpunkten wird jedoch die Qualität der Anpassung deutlich verbessert. Hierdurch erhält man nun jeweils eine Bahnkurve 172, die Angaben darüber liefert, zu welchem Zeitpunkt sich der ID-Geber an welchem Ort im Raum bezogen auf das Fahrzeugkoordinatensystem 100 aufgehalten hat. Hieraus kann erkannt werden, dass die Bahnkurve 172vom Inneren 11 des Fahrzeugs 10 durch den Zugangsbereich 25-1 vor der linken vorderen Zugangsöffnung 20-1 verläuft und hierbei von innen nach außen weist, sodass eindeutig festgestellt werden kann, dass der ID-Geber 40 den Innenraum 11 des Fahrzeugs 10 verlassen hat. In analoger Weise kann auch das Eintreten des ID-Gebers in das Fahrzeug ermittelt werden.

An dieser Stelle sei angemerkt, dass eine auf Trägheitsinformationen basierend Ermittlung eines Bahnsegments, d.h. der relativen Positionen, die ein Objekt bezogen auf ein mit dem Körper verknüpftes Referenzkoordinatensystem durchlaufen hat, nur für begrenzte Zeitabschnitte ohne eine erneute Kalibration verwendbar ist. Für Zeiträume, in denen ein Ausstiegsvorgang stattfindet, sind die Daten jedoch ausreichend, die beispielsweise mit Beschleunigungs- und Gyrosensoren von gebräuchlichen (Drehlagesensoren) sogenannten Smartphone-Mobiltelefonen erreicht werden.

Bei dem ID-Geber kann es sich um ein Smartphone handeln. Es sind jedoch auch Ausführungen möglich, bei denen ein ID-Geber wie ein klassischer Schlüssel jedoch mit Trägheitssensorik und Magnetsensorik sowie Kommunikationsschnittstellen ausgebildet ist und keine oder nur begrenzte, in Form von Tasten und gegebenenfalls einem Lichtsignal als Rückkopplung ausgebildeten Mensch-Maschine-Schnittstellen ausgerüstet ist.

Es versteht sich für den Fachmann, dass hier lediglich einfache beispielhafte Ausführungsformen beschrieben sind. Die in der Erfindung genannten Merkmale der unterschiedlichen Ausführungsformen können in beliebiger Weise miteinander kombiniert werden, um die Erfindung umzusetzen, sofern sie innerhalb des Umfangs der beigefügten Ansprüche bleiben.

### Bezugszeichenliste

- 1: System zur Innen- und Außenerkennung eines ID-Gebers
- 10: Fahrzeug
- 11: Innenraum
- 12: Karosserie
- 15: Annäherungssensor
- 17: Vektorfeldsensorik
- 18: Magnetsensorik
- 19: drahtlose Kommunikationsschnittstelle
- 20, 20x: Zugangsöffnungen
- 21,21x: Fahrzeugkomponente
- 21-1: Tür vorne links
- 21-2: Tür hinten links
- 21-3: Heckklappe
- 21-4: Tür hinten rechts
- 21-5: Tür vorne rechts
- 25, 25x: Zugangsbereich
- 30, 30x: Ultrabreitband-Sende- und Empfangseinrichtung
- 31, 31x: Kommunikationsbereich
- 33: Ultrabreitbandkommunikationsanfrage
- 40: ID-Geber
- 41: Ultrabreitband-Sende- und Empfangseinrichtung
- 42: Trägheitssensorik
- 44: Ultrabreitbandkommunikationsantwort
- 45: Beschleunigungssensor
- 46: Drehlagesensor
- 47: Vektorfeldsensorik
- 48: Magnetfeldsensorik
- 49: drahtlose Kommunikationsschnittstelle
- 60: Steuereinrichtung
- 61: Innenraumsignal
- 70: andere Steuergeräte
- 80: Fahrzeugbus
- 100: Fahrzeugkoordinatensystem
- 101: Ursprung
- 102: X-Achse
- 103: Y-Achse
- 130: Richtungsvektor des Erdmagnetfelds
- 140: ID-Geberkoordinatensystem
- 141: Ursprung
- 142: X-Achse
- 143: Y-Achse
- 150: ID-Geberreferenzkoordinatensystem
- 151: Ursprung
- 152: X-Achse
- 153: Y-Achse
- 160: Bewegungspfeil
- 170: Bahnsegmentabschnitt
- 171: Bahnsegment
- 172: Bahnkurve
- 190: Abstandsvektor
- 191: Abstand
- 192: Kreis/Kreisbogenabschnitt

## Patentansprüche

1. System (1) zur Innen- und Außenerkennung eines ID-Gebers (40) für ein Fahrzeug (10) mit Zugangsöffnungen (20) zu einem Innenraum (11) des Fahrzeugs (10), umfassend ein Fahrzeug (10), mehrere am Fahrzeug (10) angeordnete Ultrabreitband-Sende- und Empfangseinrichtungen (30), und einen ID-Geber (40) mit einer weiteren Ultrabreitband-Sende- und Empfangseinrichtung (41) und einer in dem ID-Geber (40) angeordneten Trägheitssensorik (42), anhand derer Eigenbewegungen des ID-Gebers (40) erfassbar sind, wobei jeder der Zugangsöffnungen (20) mindestens eine der mehreren am Fahrzeug (10) angeordnete Ultrabreitband-Sende- und Empfangseinrichtungen (30) zugeordnet ist, deren Kommunikationsbereich (31) im geöffneten Zustand der Zugangsöffnung (20) einen Zugangsbereich (25) der Zugangsöffnung (20) vollständig abdeckt und die im geöffneten Zustand Ultrabreitbandkommunikationsanfragen (33) sendet, wobei der ID-Geber (40) ausgebildet ist, über die weitere Ultrabreitband-Sende- und Empfangseinrichtung (41) Ultrabreitbandkommunikationsantworten (44) zu senden, und ferner ausgebildet ist, Informationen über die Eigenbewegung des ID-Gebers (40) an das Fahrzeug (10) zu übermitteln,
wobei das Fahrzeug und der ID-Geber (40) jeweils eine Vektorfeldsensorik (17, 47) aufweisen, um zumindest von einem Erdgebundenen Vektorfeld dessen lokale Richtung zu ermitteln, die als Bezugsrichtung für Koordinatenachsenrichtungen verwendet wird, bezüglich derer die Informationen über die Eigenbewegung des ID-Gebers (40) angegeben werden, wobei das erdgebundene Vektorfeld das Erdmagnetfeld ist und als eine Vektorgröße eine Magnetfeldstärke des Erdmagnetfelds ermittelt wird,
wobei das Fahrzeug (10) ausgebildet ist, anhand der Ultrabreitbandkommunikation und der vom ID-Geber (40) übermittelten Informationen über die Eigenbewegung des ID-Gebers (40) zu erkennen, ob sich der ID-Geber (40) in den Innenraum (11) oder aus dem Innenraum (11) des Fahrzeugs (10) bewegt, und entsprechend ein Innenraumsignal (61) bereitzustellen, dessen Wert angibt, ob der ID-Geber (40) als im Innenraum (11) des Fahrzeugs (10) befindlich erkannt ist oder nicht, wobei anhand der Ultrabreitbandkommunikation im zeitlichen Verlauf Abstände von einer der einen oder mehreren Ultrabreitband-Sende- und Empfangseinrichtungen (30), die der entsprechenden Zugangsöffnung zugeordnet ist, zu dem ID-Geber (40) ermittelt werden und die Informationen über die Eigenbewegung Daten eines Bahnsegments (171) der Bewegung des ID-Gebers (40) enthalten oder aus den Informationen über die Eigenbewegung ein Bahnsegment (171) der Bewegung des ID-Gebers (40) ermittelt wird und das jeweilige Bahnsegment anhand der ermittelten Abstände und anhand der Zeitpunkte der ermittelten Abstände und der Zeitpunkte, an denen die entsprechenden Orte des jeweiligen Bahnsegments relativ zueinander durchlaufen wurden relativ zum Zugangsbereich (25) als Bahnkurve (172) positioniert wird und das Eintreten in den Innenraum (11) festgestellt wird, wenn die Bahnkurve (172) durch den Zugangsbereich (25) in Innenraum (11) weist, und das Verlassen des Innenraums (11) festgestellt wird, wenn die Bahnkurve (172) aus dem Innenraum (11) durch den Zugangsbereich (25) nach außen weist.

2. System (1) nach Anspruch 1, **dadurch gekennzeichnet, dass** die Informationen über die Eigenbewegung des ID-Gebers (40) mittels der Ultrabreitbandkommunikation von dem ID-Geber (40) zu dem Fahrzeug (10) übermittelt werden.

3. System (1) nach Anspruch 1 **dadurch gekennzeichnet, dass** die Informationen über die Eigenbewegung des ID-Gebers (40) mittels einer von der Ultrabreitbandkommunikation verschiedenen drahtlosen Kommunikation übermittelt werden.

4. System (1) nach einem der vorangehenden Ansprüche, **dadurch gekennzeichnet, dass** eine Vereinbarkeit des Bahnsegments (171) mit den ermittelten Abständen überprüft wird, um einen Konfidenzwert für die Erkennung des Eintretens des ID-Gebers in den Innenraum (11) und das Verlassen des Innenraums (11) zu ermitteln und eine Änderungen des Innenraumsignals (61) abhängig von mindestens einem Schwellenwert des Konfidenzwerts erfolgt.

5. System (1) nach einem der vorangehenden Ansprüche, **dadurch gekennzeichnet, dass** die mindestens eine der einen oder mehreren Ultrabreitband-Sende- und Empfangseinrichtungen (30), die einer der Zugangsöffnungen (20) zugeordnet ist, jeweils an einer Verschlusskomponente (21), insbesondere einer Tür (21-x) oder Klappe (21-3), angeordnet ist, die zum Verschließen der jeweiligen Zugangsöffnung (20) vorgesehen ist.

6. System (1) nach Anspruch 4, **dadurch gekennzeichnet, dass** die mindestens eine der einen oder mehreren Ultrabreitband-Sende- und Empfangseinrichtungen, die an der Verschlusskomponente (21) angeordnet ist, in einem Bereich eines Fensters oder angrenzend an das Fenster der Verschlusskomponente (21) angeordnet ist, wenn das Fenster öffenbar ist.

7. Fahrzeug (10) mit Innen- und Außenerkennung eines ID-Gebers (40),
wobei das Fahrzeug Zugangsöffnungen (20) zu seinem Innenraum (11) und mehrere am Fahrzeug (10) angeordnete Ultrabreitband-Sende- und Empfangseinrichtungen (30) umfasst,
wobei jeder der Zugangsöffnungen (20) mindestens einer der einen oder der mehreren am Fahrzeug (10) angeordnete Ultrabreitband-Sende- und Empfangseinrichtungen (30) zugeordnet ist,
deren Kommunikationsbereich (31) im geöffneten Zustand der Zugangsöffnung (20) einen Zugangsbereich (25) der Zugangsöffnung (20) vollständig abdeckt und
die im geöffneten Zustand Ultrabreitbandkommunikationsanfragen (33) sendet und Ultrabreitbandkommunikationsantworten (44) des ID-Gebers (40), sofern dieser sich in dem Kommunikationsbereich (31) aufhält, erfasst, und
das Fahrzeug (10) ferner ausgebildet ist, Informationen über die Eigenbewegung des ID-Gebers (40) von dem ID-Geber (40) zu empfangen,
wobei das Fahrzeug und der ID-Geber (40) jeweils eine Vektorfeldsensorik (17, 47) aufweisen, um zumindest von einem Erdgebundenen Vektorfeld dessen lokale Richtung zu ermitteln, die als Bezugsrichtung für Koordinatenachsenrichtungen verwendet wird, bezüglich derer die Informationen über die Eigenbewegung des ID-Gebers (40) angegeben werden, wobei das erdgebundene Vektorfeld das Erdmagnetfeld ist und als eine Vektorgröße eine Magnetfeldstärke des Erdmagnetfelds ermittelt wird,
wobei das Fahrzeug (10) ausgebildet ist, anhand der Ultrabreitbandkommunikation und der vom ID-Geber (40) übermittelten Informationen über die Eigenbewegung des ID-Gebers (40) zu erkennen, ob sich der ID-Geber (40) in den Innenraum (11) oder aus dem Innenraum (11) des Fahrzeugs (10) bewegt, und entsprechend ein Innenraumsignal (70) bereitzustellen, wenn der ID-Geber (40) im Innenraum (11) des Fahrzeugs (10) befindlich erkannt ist, wobei anhand der Ultrabreitbandkommunikation im zeitlichen Verlauf Abstände von einer der einen oder mehreren Ultrabreitband-Sende- und Empfangseinrichtungen (30), die der entsprechenden Zugangsöffnung zugeordnet ist, zu dem ID-Geber (40) ermittelt werden und die Informationen über die Eigenbewegung Daten eines Bahnsegments (171) der Bewegung des ID-Gebers (40) enthalten oder aus den Informationen über die Eigenbewegung ein Bahnsegment (171) der Bewegung des ID-Gebers (40) ermittelt wird und das jeweilige Bahnsegment (171) anhand der ermittelten Abstände und anhand der Zeitpunkte der ermittelten Abstände und der Zeitpunkte, an denen die entsprechenden Orte des jeweiligen Bahnsegments relativ zueinander durchlaufen wurden relativ zum Zugangsbereich (25) als Bahnkurve (172) positioniert wird und das Eintreten in den Innenraum (11) festgestellt wird, wenn die Bahnkurve (172) durch den Zugangsbereich (25) in Innenraum (11) weist, und das Verlassen des Innenraums (11) festgestellt wird, wenn die Bahnkurve (172) aus dem Innenraum (11) durch den Zugangsbereich (25) nach außen weist.

8. Verfahren zur Innen- und Außenerkennung eines ID-Gebers (40) für ein Fahrzeug (10) mit Zugangsöffnungen (20) zu einem Innenraum (11) des Fahrzeugs (10) umfassend die Schritte:
Senden von Ultrabreitbandkommunikationsanfragen (33) in jeden Zugangsbereich (25) einer der Zugangsöffnungen(20), sofern die entsprechende Zugangsöffnung (20) in einem geöffneten Zustand ist, wobei das Senden der Kommunikationsanfragen (33) in der Weise erfolgt, dass jeder der Zugangsbereiche (25) vollständig von einem oder mehreren Kommunikationsbereichen (31) abgedeckt ist, wobei ein Kommunikationsbereich (31) ein Raumbereich ist, in dem eine Ultrabreitbandkommunikation mit mindestens einer Ultrabreitband-Sende- und Empfangseinrichtungen (30) ausführbar ist,
Erfassen von Ultrabreitbandkommunikationsantworten (44) eines ID-Gebers (40) und zusätzlich Erfassen von von dem ID-Geber (40) übertragenen Informationen über die Eigenbewegung des ID-Gebers (40),
wobei das Fahrzeug und der ID-Geber (40) jeweils eine Vektorfeldsensorik (17, 47) aufweisen, um zumindest von einem Erdgebundenen Vektorfeld dessen lokale Richtung zu ermitteln, die als Bezugsrichtung für Koordinatenachsenrichtungen verwendet wird, bezüglich derer die Informationen über die Eigenbewegung des ID-Gebers (40) angegeben werden, wobei das erdgebundene Vektorfeld das Erdmagnetfeld ist und als eine Vektorgröße eine Magnetfeldstärke des Erdmagnetfelds ermittelt wird, Erkennen anhand der über das Austauschen der Ultrabreitbandkommunikationsanfragen (33) und Ultrabreitbandkommunikationsantworten (44) ausgeführten Ultrabreitbandkommunikation und der Übermittelten Informationen über die Eigenbewegung des ID-Gebers (40), ob der ID-Geber (40) in den Innenraum (11) eingetreten ist oder den Innenraum (11) verlassen hat, und Erzeugen eines Innenraumsignals (61), dessen Wert angibt, ob das der ID-Geber (40) als im Innenraum (11) des Fahrzeugs (10) erkannt ist oder nicht, basierend auf dem erkannten Eintreten des ID-Gebers (40) in den Innenraum (11) oder Verlassen des Innenraums (11), wobei bei der Ultrabreitbandkommunikation aus zeitlichen Abständen zwischen den Aussendungen einer der Ultrabreitbandkommunikationsanfragen (33) und dem Empfangen einer darauffolgenden Ultrabreitbandkommunikationsantwort (44) räumliche Abstände des ID-Gebers (40) von der Ultrabreitband-Sende- und Empfangseinrichtung (30), in deren Kommunikationsbereich (31) sich der ID-Geber (40) befindet, ermittelt werden und wobei die Informationen über die Eigenbewegung Daten eines Bahnsegments (171) der Bewegung des ID-Gebers enthalten oder aus den Informationen über die Eigenbewegung ein Bahnsegment (171) der Bewegung des ID-Gebers (40) ermittelt wird, und das jeweilige Bahnsegment anhand der ermittelten Abstände und anhand der Zeitpunkte der ermittelten Abstände und der Zeitpunkte, an denen die entsprechenden Orte des jeweiligen Bahnsegments relativ zueinander durchlaufen wurden relativ zum Zugangsbereich (25) als Bahnkurve (172) positioniert wird und das Eintreten in den Innenraum (11) festgestellt wird, wenn die Bahnkurve (172) durch den Zugangsbereich (25) in Innenraum (11) weist, und das Verlassen Innenraums (11) festgestellt wird, wenn die Bahnkurve (172) aus dem Innenraum (11) durch den Zugangsbereich (25) nach außen weist.

9. Verfahren nach Anspruch 8, **dadurch gekennzeichnet, dass** anhand der ermittelten Abstände die Bewegung des ID-Gebers (40) durch den Zugangsbereich (25) gemeinsam mit den übertragenen Informationen über die Eigenbewegung des ID-Gebers (40) plausibilisiert werden.

## Claims

1. System (1) for internally and externally detecting an ID transmitter (40) for a vehicle (10) having access openings (20) to an interior (11) of the vehicle (10), comprising a vehicle (10), a plurality of ultra-broadband transmitting and receiving devices (30) arranged on the vehicle (10), and an ID transmitter (40) having an additional ultra-broadband transmitting and receiving device (41), and an inertial sensor system (42) arranged in the ID transmitter (40), by means of which system intrinsic movements of the ID transmitter (40) can be detected, wherein each of the access openings (20) is associated with at least one of the plurality of ultra-broadband transmitting and receiving devices (30) arranged on the vehicle (10), the communication region (31) of which devices fully covers an access region (25) of the access opening (20) in the open state of the access opening (20) and which transmits ultra-broadband communication requests (33) in the open state, wherein the ID transmitter (40) is designed to transmit ultra-broadband communication responses (44) via the additional ultra-broadband transmitting and receiving device (41), and is further designed to transmit information about the intrinsic movement of the ID transmitter (40) to the vehicle (10),
wherein the vehicle and the ID transmitter (40) each have a vector field sensor system (17, 47) in order to determine, at least from an earth-bound vector field, its local direction, which is used as a reference direction for coordinate axis directions, with respect to which the information about the intrinsic movement of the ID transmitter (40) is specified, wherein the earth-bound vector field is the Earth's magnetic field and a magnetic field strength of the Earth's magnetic field is determined as a vector size,
wherein the vehicle (10) is designed to detect, on the basis of the ultra-broadband communication and the information about the intrinsic movement of the ID transmitter (40) transmitted by the ID transmitter (40), whether or not the ID transmitter (40) moves into the interior (11) or out of the interior (11) of the vehicle (10), and accordingly to provide an interior signal (61) of which value indicates whether or not the ID transmitter (40) is detected as being located in the interior (11) of the vehicle (10), wherein distances from one of the one or more ultra-broadband transmitting and receiving devices (30) associated with the corresponding access opening to the ID transmitter (40) are determined over time on the basis of the ultra-broadband communication, and the information about the intrinsic movement obtain data of a path segment (171) of the movement of the ID transmitter (40) or a path segment (171) of the movement of the ID transmitter (40) is determined from the information about the intrinsic movement, and the relevant path segment is positioned as a path curve (172) relative to the access region (25) on the basis of the determined distances and on the basis of the points in time of the determined distances and the points in time at which the corresponding locations of the relevant path segment were passed through relative to one another, and the entry into the interior (11) is identified if the path curve (172) through the access region (25) points into the interior (11), and the exit from the interior (11) is identified if the path curve (172) points outward from the interior (11) through the access region (25).

2. System (1) according to claim 1, **characterized in that** the information about the intrinsic movement of the ID transmitter (40) is transmitted by means of ultra-broadband communication from the ID transmitter (40) to the vehicle (10).

3. System (1) according to claim 1, **characterized in that** the information about the intrinsic movement of the ID transmitter (40) is transmitted by means of wireless communication which is different from the ultra-broadband communication.

4. System (1) according to any of the preceding claims,
**characterized in that** the compatibility of the path segment (171) with the determined distances is checked in order to determine a confidence value for detecting the entry of the ID transmitter into the interior (11) and the exit from the interior (11), and a change in the interior signal (61) takes place depending on at least one threshold value of the confidence value.

5. System (1) according to any of the preceding claims,
**characterized in that** the at least one of the one or more ultra-broadband transmitting and receiving devices (30) associated with one of the access openings (20) is in each case arranged on a closure component (21), in particular a door (21-x) or flap (21-3), which is provided for closing the relevant access opening (20).

6. System (1) according to claim 4, **characterized in that** the at least one of the one or more ultra-broadband transmitting and receiving devices arranged on the closure component (21) is arranged in a region of a window or adjacent to the window of the closure component (21) when it is possible for the window to be opened.

7. Vehicle (10) for internally and externally detecting an ID transmitter (40),
wherein the vehicle comprises access openings (20) to its interior (11) and a plurality of ultra-broadband transmitting and receiving devices (30) arranged on the vehicle (10),
wherein each of the access openings (20) is associated with at least one of the one or more ultra-broadband transmitting and receiving devices (30) arranged on the vehicle (10),
in the open state of the access opening (20), the communication region (31) of said devices completely covers an access region (25) of the access opening (20) and which, in the open state, transmits ultra-broadband communication requests (33) and detects ultra-broadband communication responses (44) of the ID transmitter (40), provided that the latter is in the communication region (31), and
the vehicle (10) is further designed to receive information about the intrinsic movement of the ID transmitter (40) from the ID transmitter (40),
wherein the vehicle and the ID transmitter (40) each have a vector field sensor system (17, 47) in order to determine, at least from an earth-bound vector field, its local direction, which is used as a reference direction for coordinate axis directions, with respect to which the information about the intrinsic movement of the ID transmitter (40) is specified, wherein the earth-bound vector field is the Earth's magnetic field and a magnetic field strength of the Earth's magnetic field is determined as a vector size,
wherein the vehicle (10) is designed to detect whether or not the ID transmitter (40) moves into the interior (11) or out of the interior (11) of the vehicle (10) on the basis of ultra-broadband communication and the information transmitted by the ID transmitter (40), and accordingly to provide an interior signal (70) if the ID transmitter (40) is detected as being located in the interior (11) of the vehicle (10), wherein distances from one of the one or more ultra-broadband transmitting and receiving devices (30) associated with the corresponding access opening to the ID transmitter (40) are determined over time on the basis of the ultra-broadband communication, and the information about the intrinsic movement obtain data of a path segment (171) of the movement of the ID transmitter (40) or a path segment (171) of the movement of the ID transmitter (40) is determined from the information about the intrinsic movement, and the relevant path segment (171) is positioned as a path curve (172) relative to the access region (25) on the basis of the determined distances and on the basis of the points in time of the determined distances and the points in time at which the corresponding locations of the relevant path segment were passed through relative to one another, and the entry into the interior (11) is identified if the path curve (172) through the access region (25) points into the interior (11), and the exit from the interior (11) is identified if the path curve (172) points outward from the interior (11) through the access region (25).

8. Method for internally and externally detecting an ID transmitter (40) for a vehicle (10) having access openings (20) to an interior (11) of the vehicle (10), comprising the steps of:
transmitting ultra-broadband communication requests (33) to each access region (25) of one of the access openings(20), provided the corresponding access opening (20) is in an open state, wherein the communication requests (33) are transmitted in such a way that each of the access regions (25) is completely covered by one or more communication regions (31), wherein a communication region (31) is a spatial region in which ultra-broadband communication with at least one ultra-broadband transmitting and receiving device (30) can be carried out,
detecting ultra-broadband communication responses (44) of an ID transmitter (40) and additionally detecting information transmitted by the ID transmitter (40) about the intrinsic movement of the ID transmitter (40),
wherein the vehicle and the ID transmitter (40) each have a vector field sensor system (17, 47) in order to determine, at least from an earth-bound vector field, its local direction, which is used as a reference direction for coordinate axis directions, with respect to which the information about the intrinsic movement of the ID transmitter (40) is specified, wherein the earth-bound vector field is the Earth's magnetic field and a magnetic field strength of the Earth's magnetic field is determined as a vector size,
detecting, on the basis of the ultra-broadband communication carried out via the exchange of the ultra-broadband communication requests (33) and ultra-broadband communication responses (44) and the transmitted information about the intrinsic movement of the ID transmitter (40), whether the ID transmitter (40) has entered the interior (11) or exited the interior (11), and generating an interior signal (61) of which value indicates whether or not the ID transmitter (40) is detected in the interior (11) of the vehicle (10), based on the detected entry of the ID transmitter (40) into the interior (11) or exit from the interior (11), wherein, in the case of ultra-broadband communication, from time intervals between transmitting one of the ultra-broadband communication requests (33) and receiving a following ultra-broadband communication response (44), spatial distances of the ID transmitter (40) are determined by the ultra-broadband transmitting and receiving device (30), in the communication region (31) of which the ID transmitter (40) is located, and wherein the information about the intrinsic movement obtain data of a path segment (171) of the movement of the ID transmitter or a path segment (171) of the movement of the ID transmitter (40) is determined from the information about the intrinsic movement, and the relative path segment is positioned as a path curve (172) relative to the access region (25) on the basis of the determined distances and on the basis of the points in time of the determined distances and the points in time at which the corresponding locations of the relative path segments were passed through relative to one another, and the entry into the interior (11) is identified if the path curve (172) through the access region (25) points into the interior (11), and the exit from the interior (11) is identified if the path curve (172) from the interior (11) points outward through the access region (25).

9. Method according to claim 8, **characterized in that** the movement of the ID transmitter (40) through the access region (25) together with the transmitted information about the intrinsic movement of the ID transmitter (40) are checked for plausibility on the basis of the determined distances.

## Revendications

1. Système (1) permettant la reconnaissance intérieure et extérieure d'un émetteur d'ID (40) pour un véhicule (10) comportant des ouvertures d'accès (20) à un habitacle (11) du véhicule (10), comprenant un véhicule (10), plusieurs dispositifs d'envoi et de réception à bande ultralarge (30) disposés sur le véhicule (10), et un émetteur d'ID (40) comportant un autre dispositif d'envoi et de réception à bande ultralarge (41) et un système de capteurs inertiels (42) disposé dans l'émetteur d'ID (40), à l'aide duquel des mouvements propres de l'émetteur d'ID (40) peuvent être détectés, dans lequel chacune des ouvertures d'accès (20) est associée à au moins l'un des dispositifs d'envoi et de réception à bande ultralarge (30) disposés sur le véhicule (10), dont la zone de communication (31) couvre complètement, à l'état ouvert de l'ouverture d'accès (20), une zone d'accès (25) de l'ouverture d'accès (20) et qui, à l'état ouvert, envoie des demandes de communication à bande ultralarge (33), dans lequel l'émetteur d'ID (40) est configuré pour envoyer des réponses de communication à bande ultralarge (44) par l'intermédiaire de l'autre dispositif d'envoi et de réception à bande ultralarge (41) et est en outre configuré pour transmettre des informations concernant le mouvement propre de l'émetteur d'ID (40) au véhicule (10),
dans lequel le véhicule et l'émetteur d'ID (40) présentent respectivement un système de capteurs de champ vectoriel (17, 47) pour déterminer, au moins à partir d'un champ vectoriel lié à la terre, sa direction locale qui est utilisée comme direction de référence pour des directions d'axes de coordonnées par rapport auxquelles les informations concernant le mouvement propre de l'émetteur d'ID (40) sont indiquées, dans lequel le champ vectoriel lié à la terre est le champ magnétique terrestre et une intensité de champ magnétique du champ magnétique terrestre est déterminée comme grandeur vectorielle,
dans lequel le véhicule (10) est configuré pour reconnaître, à l'aide de la communication à bande ultralarge et des informations transmises par l'émetteur d'ID (40) concernant le mouvement propre de l'émetteur d'ID (40), si l'émetteur d'ID (40) se déplace dans l'habitacle (11) ou hors de l'habitacle (11) du véhicule (10), et pour fournir en conséquence un signal d'habitacle (61) dont la valeur indique si l'émetteur d'ID (40) est reconnu ou non comme se trouvant dans l'habitacle (11) du véhicule (10), dans lequel, à l'aide de la communication à bande ultralarge, des distances entre un dispositif d'envoi et de réception à bande ultralarge parmi le ou les dispositifs d'envoi et de réception à bande ultralarge (30), lequel est associé à l'ouverture d'accès correspondante, et l'émetteur d'ID (40) sont déterminées dans le temps et les informations concernant le mouvement propre contiennent des données d'un segment de voie (171) du mouvement de l'émetteur d'ID (40) ou, à partir des informations concernant le mouvement propre, un segment de voie (171) du mouvement de l'émetteur d'ID (40) est déterminé et le segment de voie respectif est positionné par rapport à la zone d'accès (25) comme une courbe de voie (172) à l'aide des distances déterminées et à l'aide des instants des distances déterminées et des instants auxquels les emplacements correspondants du segment de voie respectif ont été traversés les uns par rapport aux autres, et l'entrée dans l'habitacle (11) est constatée lorsque la courbe de voie (172) passe dans l'habitacle (11) par la zone d'accès (25), et la sortie de l'habitacle (11) est constatée lorsque la courbe de voie (172) sort de l'habitacle (11) vers l'extérieur par la zone d'accès (25).

2. Système (1) selon la revendication 1, **caractérisé en ce que** les informations concernant le mouvement propre de l'émetteur d'ID (40) sont transmises depuis l'émetteur d'ID (40) au véhicule (10) au moyen de la communication à bande ultralarge.

3. Système (1) selon la revendication 1, **caractérisé en ce que** les informations concernant le mouvement propre de l'émetteur d'ID (40) sont transmises au moyen d'une communication sans fil différente de la communication à bande ultralarge.

4. Système (1) selon l'une des revendications précédentes,
**caractérisé en ce qu'**une compatibilité du segment de voie (171) avec les distances déterminées est vérifiée afin de déterminer une valeur de confiance pour la reconnaissance de l'entrée de l'émetteur d'ID dans l'habitacle (11) et la sortie de l'habitacle (11) et une modification du signal d'habitacle (61) est effectuée en fonction d'au moins une valeur seuil de la valeur de confiance.

5. Système (1) selon l'une des revendications précédentes,
**caractérisé en ce que** l'au moins un dispositif d'envoi et de réception à bande ultralarge parmi le ou les dispositifs d'envoi et de réception à bande ultralarge (30) qui est associé à l'une des ouvertures d'accès (20) est respectivement disposé au niveau d'un composant de fermeture (21), en particulier d'une porte (21-x) ou d'un élément de type clapet (21-3), prévu pour la fermeture de l'ouverture d'accès (20) respective.

6. Système (1) selon la revendication 4, **caractérisé en ce que** l'au moins un dispositif d'envoi et de réception à bande ultralarge parmi le ou les dispositifs d'envoi et de réception à bande ultralarge qui est disposé au niveau du composant de fermeture (21) est disposé dans une zone d'une fenêtre ou de manière adjacente à la fenêtre du composant de fermeture (21), lorsque la fenêtre peut être ouverte.

7. Véhicule (10) comportant une reconnaissance intérieure et extérieure d'un émetteur d'ID (40),
dans lequel le véhicule comprend des ouvertures d'accès (20) à son habitacle (11) et plusieurs dispositifs d'envoi et de réception à bande ultralarge (30) disposés sur le véhicule (10),
dans lequel chacune des ouvertures d'accès (20) est associée à au moins un dispositif d'envoi et de réception à bande ultralarge parmi le ou les dispositifs d'envoi et de réception à bande ultralarge (30) disposés sur le véhicule (10),
dont la zone de communication (31), dans l'état ouvert de l'ouverture d'accès (20), couvre complètement une zone d'accès (25) de l'ouverture d'accès (20) et qui, dans l'état ouvert, envoie des demandes de communication à bande ultralarge (33) et détecte des réponses de communication à bande ultralarge (44) de l'émetteur d'ID (40) lorsque celui-ci se trouve dans la zone de communication (31), et
le véhicule (10) est en outre configuré pour recevoir des informations concernant le mouvement propre de l'émetteur d'ID (40) en provenance de l'émetteur d'ID (40),
dans lequel le véhicule et l'émetteur d'ID (40) présentent respectivement un système de capteurs de champ vectoriel (17, 47) pour déterminer, au moins à partir d'un champ vectoriel lié à la terre, sa direction locale qui est utilisée comme direction de référence pour des directions d'axes de coordonnées par rapport auxquelles les informations concernant le mouvement propre de l'émetteur d'ID (40) sont indiquées, dans lequel le champ vectoriel lié à la terre est le champ magnétique terrestre et une intensité de champ magnétique du champ magnétique terrestre est déterminée comme grandeur vectorielle,
dans lequel le véhicule (10) est configuré pour reconnaître, à l'aide de la communication à bande ultralarge et des informations transmises par l'émetteur d'ID (40) concernant le mouvement propre de l'émetteur d'ID (40), si l'émetteur d'ID (40) se déplace dans l'habitacle (11) ou hors de l'habitacle (11) du véhicule (10), et pour fournir en conséquence un signal d'habitacle (70) lorsque l'émetteur d'ID (40) est reconnu comme se trouvant dans l'habitacle (11) du véhicule (10), dans lequel, à l'aide de la communication à bande ultralarge, des distances entre un dispositif d'envoi et de réception à bande ultralarge parmi le ou les dispositifs d'envoi et de réception à bande ultralarge (30), lequel est associé à l'ouverture d'accès correspondante, et l'émetteur d'ID (40) sont déterminées dans le temps et les informations concernant le mouvement propre contiennent des données d'un segment de voie (171) du mouvement de l'émetteur d'ID (40) ou, à partir des informations concernant le mouvement propre, un segment de voie (171) du mouvement de l'émetteur d'ID (40) est déterminé et le segment de voie (171) respectif est positionné par rapport à la zone d'accès (25) comme une courbe de voie (172) à l'aide des distances déterminées et à l'aide des instants des distances déterminées et des instants auxquels les emplacements correspondants du segment de voie respectif ont été traversés les uns par rapport aux autres, et l'entrée dans l'habitacle (11) est constatée lorsque la courbe de voie (172) passe dans l'habitacle (11) par la zone d'accès (25), et la sortie de l'habitacle (11) est constatée lorsque la courbe de voie (172) sort de l'habitacle (11) vers l'extérieur par la zone d'accès (25).

8. Procédé permettant la reconnaissance intérieure et extérieure d'un émetteur d'ID (40) pour un véhicule (10) comportant des ouvertures d'accès (20) à un habitacle (11) du véhicule (10), comprenant les étapes consistant à :
envoyer des demandes de communication à bande ultralarge (33) dans chaque zone d'accès (25) de l'une des ouvertures d'accès (20) lorsque l'ouverture d'accès (20) correspondante est dans un état ouvert, dans lequel l'envoi des demandes de communication (33) est effectué d'une manière telle que chacune des zones d'accès (25) est entièrement couverte par une ou plusieurs zones de communication (31), dans lequel une zone de communication (31) est une zone spatiale dans laquelle une communication à bande ultralarge peut être réalisée avec au moins un dispositif d'envoi et de réception à bande ultralarge (30),
détecter des réponses de communication à bande ultralarge (44) d'un émetteur d'ID (40) et détecter en outre des informations transmises par l'émetteur d'ID (40) concernant le mouvement propre de l'émetteur d'ID (40),
dans lequel le véhicule et l'émetteur d'ID (40) présentent respectivement un système de capteurs de champ vectoriel (17, 47) pour déterminer, au moins à partir d'un champ vectoriel lié à la terre, sa direction locale qui est utilisée comme direction de référence pour des directions d'axes de coordonnées par rapport auxquelles les informations concernant le mouvement propre de l'émetteur d'ID (40) sont indiquées, dans lequel le champ vectoriel lié à la terre est le champ magnétique terrestre et une intensité de champ magnétique du champ magnétique terrestre est déterminée comme grandeur vectorielle,
reconnaître, à l'aide des communications à bande ultralarge, réalisées par l'intermédiaire de l'échange des demandes de communication à bande ultralarge (33) et des réponses de communication à bande ultralarge (44), et de la transmission d'informations concernant le mouvement propre de l'émetteur d'ID (40), si l'émetteur d'ID (40) est entré dans l'habitacle (11) ou est sorti de l'habitacle (11), et générer un signal d'habitacle (61) dont la valeur indique si le l'émetteur d'ID (40) est reconnu ou non comme étant dans l'habitacle (11) du véhicule (10), sur la base de l'entrée de l'émetteur d'ID (40) dans l'habitacle (11) ou de la sortie de l'habitacle (11) reconnues, dans lequel, lors de la communication à bande ultralarge, à partir de distances temporelles entre les envois de l'une des demandes de communication à bande ultralarge (33) et la réception d'une réponse de communication à bande ultralarge (44) ultérieure, des distances spatiales entre l'émetteur d'ID (40) et le dispositif d'envoi et de réception à bande ultralarge (30) dans la zone de communication (31) duquel se trouve l'émetteur d'ID (40) sont déterminées et dans lequel les informations concernant le mouvement propre sont des données d'un segment de voie (171) du mouvement de l'émetteur d'ID ou, à partir des informations concernant le mouvement propre, un segment de voie (171) du mouvement de l'émetteur d'ID (40) est déterminé, et le segment de voie respectif est positionné par rapport à la zone d'accès (25) comme une courbe de voie (172) à l'aide des distances déterminées et à l'aide des instants des distances déterminées et des instants auxquels les emplacements correspondants du segment de voie respectif ont été traversés les uns par rapport aux autres, et l'entrée dans l'habitacle (11) est constatée lorsque la courbe de voie (172) passe dans l'habitacle (11) par la zone d'accès (25), et la sortie l'habitacle (11) est constatée lorsque la courbe de voie (172) sort de l'habitacle (11) vers l'extérieur par la zone d'accès (25).

9. Procédé selon la revendication 8, **caractérisé en ce que,** à l'aide des distances déterminées, le mouvement de l'émetteur d'ID (40) à travers la zone d'accès (25) est rendu plausible conjointement avec les informations transmises concernant le mouvement propre de l'émetteur d'ID (40).
